# EUROPEAN PATENT APPLICATION

(11) **EP 4 810 832 A1**
(43) Date of publication of application: **23.09.2026**
(21) Application number: 25164015.7
(22) Date of filing: 17.03.2025
(51) Int. Cl.: F16K 5/04, F16K 5/06, F16K 11/085, F16K 11/087, F16K 11/16, F16K 11/22, F24D 11/02, F24D 19/10

(54) **6-WAY VALVE AND SYSTEM FOR PROVIDING HEATING TO A FLUID STREAM**

(71) Applicant: Mitsubishi Electric Corporation, Tokyo 100-8310 (JP)
(72) Inventor: FREEMAN, James, Livingston, EH54 5DJ (GB)
(74) Representative: Pfenning, Meinig & Partner mbB

(57) **Abstract**

A 6-way valve and a system for providing heating to a fluid stream (e. g. for providing domestic hot water and/or space heating) is provided. The 6-way valve comprises or consists of a valve body (7) which has a first port (1), a second port (2), a third port (3), a fourth port (4), a fifth port (5) and a sixth port (6), and a switching means (14, 15) which is located within the valve body. The switching means is suitable to switch the 6-way valve into a first position (9) in which a first fluidic connection (11) between the first port and the second port, a second fluidic connection (12) between the third port and fourth port, and a third fluidic connection (13) between the fifth port and the sixth port is established, and is suitable to switch the 6-way valve into a second position (10) in which a first fluidic connection (11) between the first port and the fourth port, a second fluidic connection (12) between the second port and fifth port, and a third fluidic connection (13) between the third port and the sixth port is established, wherein the first, second and third fluidic connections, respectively, are fluidically separate from each other.

## Description

A 6-way valve and a system for providing heating to a fluid stream (e. g. for providing domestic hot water and/or space heating) is provided. The 6-way valve comprises or consists of a valve body which has a first port, a second port, a third port, a fourth port, a fifth port and a sixth port, and a switching means which is located within the valve body. The switching means is suitable to switch the 6-way valve into a first position in which a first fluidic connection between the first port and the second port, a second fluidic connection between the third port and fourth port, and a third fluidic connection between the fifth port and the sixth port is established, and is suitable to switch the 6-way valve into a second position in which a first fluidic connection between the first port and the fourth port, a second fluidic connection between the second port and fifth port, and a third fluidic connection between the third port and the sixth port is established, wherein the first, second and third fluidic connections, respectively, are fluidically separate from each other.

There exist many scenarios in the domain of thermal engineering where a process fluid stream may be heated by multiple heat sources at different temperatures. For example, by recovering waste heat from one or more lower temperature processes to pre-heat an incoming process fluid stream, the primary fuel consumption for the main heating stage can be reduced. To make effective use of all available heat sources to provide heating to the fluid stream, the fluid stream should pass through the heat exchanger stages in order of heat source temperature, from lowest to highest, thereby progressively raising the temperature of the heated fluid in steps between each heat transfer stage. However, where these processes take place under variable conditions, the temperatures of the available heat sources may also vary.

This situation is also relevant for heating systems in residential or commercial buildings. An example application could be a hybrid heating system consisting of an air-to-water heat pump and a solar thermal collector. In some cases, it could be desirable to use both heat sources in series to heat a fluid stream from a low temperature to a high temperature (e.g. a flow of sanitary water for a domestic application such as a bath or shower). The question might arise as to how best to order these two heat sources to maximise the use of renewable energy and minimise cost. Both a heat pump and a solar collector have efficiencies that decrease with increasing operating temperature. However, the solar collector can be considered a free source of energy and thus achieving a high solar collector efficiency might be less important than achieving a high coefficient of performance (COP) for the heat pump.

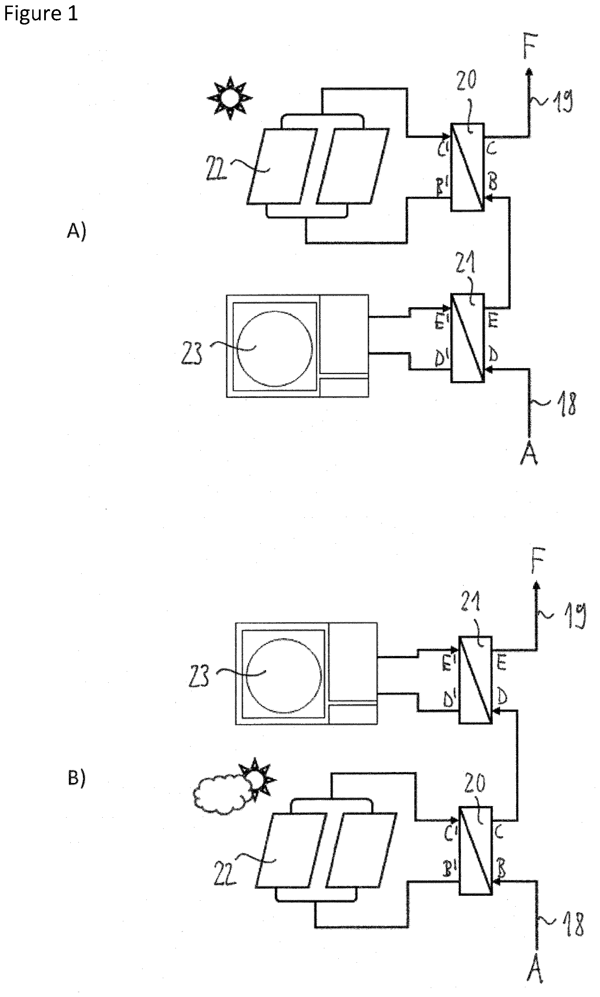

Therefore, under conditions where solar irradiance is abundant (Configuration 1), it might be preferable to order the heating processes so that the heat pump (= second heat source) provides the first pre-heating stage at low temperature for high COP and the solar collector (= first heat source) provides the final heating stage to the desired supply temperature (see Figure 1A). Conversely, under conditions where the solar irradiance level is too low to provide the desired supply temperature (Configuration 2), it may be preferable to order the heating processes so that the solar collector (= first heat source) provides the pre-heating stage and the heat pump (= second heat source) provides the final heating stage (see Figure 1B).

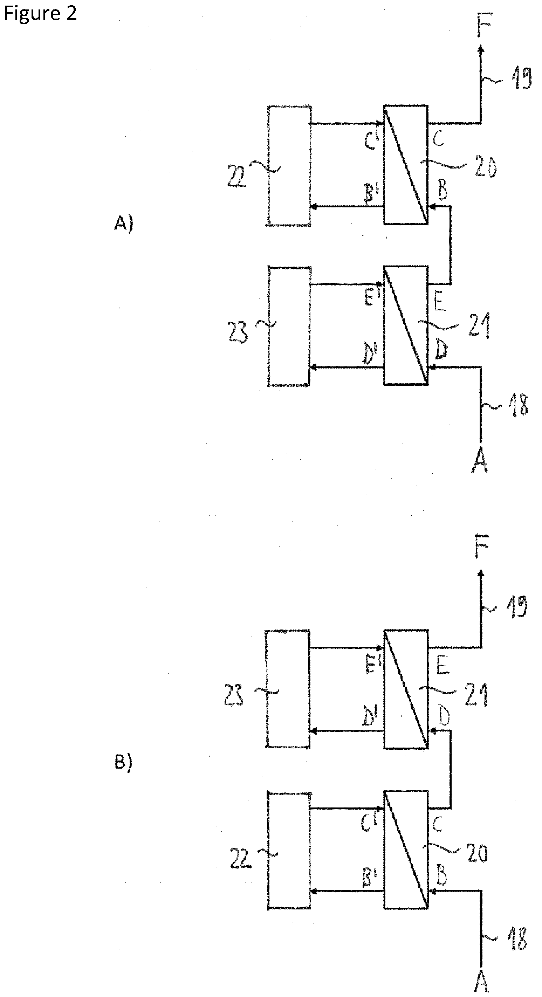

In Figure 2, it is illustrated how the respective fluidic connections of Configuration 1 and 2 can look in a system where a primary fluid is indirectly heated by two heat source fluid streams of variable temperature (originating from a first and second heat source, respectively). In some instances, the first heat source may provide a higher temperature than the second source, and in some instances the second source may provide a higher temperature than the first source. In all instances, it is preferable to order the heat exchange processes as shown in Figure 1, so that the primary fluid always receives heat from the lower-temperature heat source before the higher temperature heat source, so that the overall heat transfer process takes place with the highest possible effectiveness. For achieving the respective fluidic connections of Configurations 1 and 2 and thus "ordering" the two heat sources, the flow configuration of the primary fluid has to be switched between Configurations 1 and 2.

US 9,964,329 B2 discloses a 6-way valve which comprises two similar 3-way sub-valves being mechanically coupled with each other, such that both sub-valves are always in the same position, whereby each sub-valve has three different valve ports and a valve member with an internal connecting channel, which valve member can be moved between first and second end positions via an intermediate position such that in said first end position the first and third valve ports are connected with each other by means of said connecting channel, in said second end position the second and third valve ports are connected with each other by means of said connecting channel, and in said intermediate position said connecting channel is disconnected from said first and second valve ports. However, this 6-way valve has the disadvantage that it does not allow switching of a flow sequence of a primary fluid for changing an order of contacting the primary fluid with heat from a first heat source and from a second heat source.

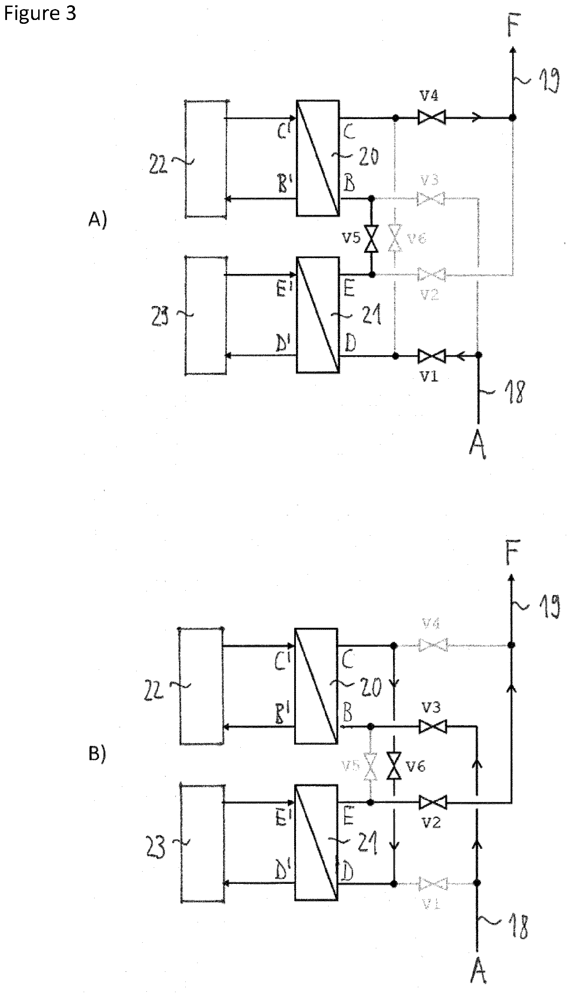

In principle, such a switching could be achieved by swapping the connections of the heat sources to the two heat exchangers, but this presents a possible problem of contamination between the fluid streams of the two heat sources at the secondary-fluid side of the heat exchangers, which can be undesirable. Thus, it is preferable to switch the flow configuration on the primary-fluid side of the heat exchangers. An obvious means of switching the flow configuration on the primary-fluid side of the heat exchangers is to use a series of valves, e. g. using a total of six two-way valves (see Figure 3). Each of the two-way valves has a basic two-position operation (i.e., either open or closed to allow or block the flow of fluid through the valve body). However, a problem with this configuration is that it requires several separate components and a complex piping arrangement, which renders the means complicated, cost-intensive, space-intensive and prone to outages and thus downtimes because a failure of already one of the six valves implies that the whole means no longer words.

Starting from the above, the objective of the invention was to provide a means which overcomes at least one disadvantage of the prior art. Preferably, the means should allow switching a flow sequence of a primary fluid for changing an order of contacting the primary fluid with heat from a first heat source and from a second heat source in an easier manner, less cost-intensive manner, more compact manner and/or for longer periods of time without downtimes.

The objective is solved by the 6-way valve having the features of claim 1 and the system having the features of claim 8. The dependent claims illustrate advantageous embodiments.

According to the invention, a 6-way valve is provided, comprising or consisting of
a) a valve body which has a first port, a second port, a third port, a fourth port, a fifth port and a sixth port; and
b) a switching means which is located within the valve body; characterized in that the switching means is suitable to switch the 6-way valve into a
   i) first position in which a first fluidic connection between the first port and the second port, a second fluidic connection between the third port and fourth port, and a third fluidic connection between the fifth port and the sixth port is established, wherein the first, second and third fluidic connections are fluidically separate from each other; and
   ii) second position in which a first fluidic connection between the first port and the fourth port, a second fluidic connection between the second port and fifth port, and a third fluidic connection between the third port and the sixth port is established, wherein the first, second and third fluidic connections are fluidically separate from each other.

The 6-way valve according to the invention allows switching a flow sequence of a primary fluid in an easier manner, less cost-intensive manner, more compact manner and/or for longer periods of time without downtimes. For example, the flow sequence which is switched can change an order of contacting the primary fluid with heat from a first heat source (within a first heat exchanger) and with heat from a second heat source (within a second heat exchanger). The flow sequence can be easily changed by a movement of the switching means within the valve body of the 6-way valve (e. g. by a simple rotation of at least one switching member thereof). This also allows to implement a change in flow sequence at very low costs and at a very small space because a space for plurality of mutually separate valves is dispended with and a consumption of electrical energy for a separate control of each of a plurality of valves is not needed. Moreover, since the 6-way valve according to the invention does not require a further valve for switching the flow as indicated above, the amount of total valves to achieve a switch in flow is reduced compared to prior art means which allow switching an order of contacting the primary fluid with heat from a first heat source and from a second heat source and which means comprises or consist of a plurality of valves.

The first port of the 6-way valve can be located opposite of the sixth port.

The second port of the 6-way valve can be located opposite of the fourth port.

The third port of the 6-way valve can be located opposite of the fifth port.

The switching means of the 6-way valve can comprise or consist of at least one switching member which is suitable to be rotated within the valve body to different positions, wherein the different positions encompass at least the first position and the second position, optionally also a third position.

The switching means of the 6-way valve can comprise or consist of two switching members that are suitable to switch the 6-way valve into the first position and second position, optionally also a third position, by a rotation thereof.

The two switching members can each comprise or consist of a ball having two fluidic channels which are fluidically separated from each other.

Moreover, the two switching members can each comprise or consist of a cylinder having two fluidic channels which are fluidically separated from each other.

Furthermore, the two switching members can each comprise or consist of a disc having two fluidic channels which are fluidically separated from each other.

The two switching members are preferably suitable to switch the 6-way valve from one of the positions into the other by a rotation of each switching member along a rotational axis by an angle in the range of 5° to 90°, particularly in the range of 10° to 90 °C, especially in the range of 20° to 90°, wherein the two switching members are optionally mechanically coupled to each other.

Alternatively, the switching means can comprise or consist of one single switching member that is suitable to switch the 6-way valve into the first position and second position, optionally also a third position, by a rotation thereof. This configuration has the advantage that it is very compact and allows to realize switching at very low costs and at a very small space.

The single switching member can comprise or consist of a ball having three fluidic channels which are fluidically separated from each other.

Moreover, the single switching member can comprise or consist of a cylinder having three fluidic channels which are fluidically separated from each other.

Furthermore, the single switching member can comprise or consist of a disc having three fluidic channels which are fluidically separated from each other.

The single switching member is preferably suitable to switch the 6-way valve from one of the positions into the other by a rotation thereof along a rotational axis by an angle in the range of 5° to 180°, particularly in the range of 10° to 180 °C, especially in the range of 20° to 180°.

The switching means can be suitable to switch the 6-way valve into a third position in which a first fluidic connection between the first port, the second port and the fourth port is established, and a second fluidic connection between the third port, fifth port and sixth port is established, wherein the first and second fluidic connections are fluidically separate from each other.

In this context, the switching means can comprise or consist of two switching members that are suitable to switch the 6-way valve into the third position by a rotation thereof. A first of the two switching members can have a tapered part which is suitable to be rotated towards the first port and which is suitable to establish a fluidic connection between the first port, second port and fourth port. Moreover, a second of the two switching members can have a tapered part which is suitable to be rotated towards the sixth port and which is suitable to establish a fluidic connection between the sixth port, third port and fifth port.

According to the invention, a system for providing heating to a fluid stream (e. g. a system for providing domestic hot water and/or space heating) is provided, comprising
i) a 6-way valve according to the invention
ii) at least one actuator which is suitable for moving the switching means of the 6-way valve, optionally at least two actuators which are suitable for moving the switching means of the 6-way valve; and
iii) a controller configured to control the at least one actuator, optionally the at least two actuators.

The system according to the invention allows to control the switching of a flow sequence of a primary fluid by controlling the at least one actuator of the system that is suitable for moving the switching means of the 6-way valve.

Switching of the flow sequence is achieved in an easier manner, less cost-intensive manner, more compact manner and/or for longer periods of time without downtimes.

The system according to the invention can further comprise a cold water supply line.

The first port of the valve body of the 6-way valve can be connected to the cold water supply line.

Moreover, the system according to the invention can further comprise a first heat exchanger for heating water, wherein the first heat exchanger comprises a first inlet port and a first outlet port and comprises a second inlet port and a second outlet port, wherein the first heat exchanger is connected to a first fluid circuit via its first inlet port and first outlet port, wherein the first fluid circuit comprises a first hot water source.

The second port of the valve body of the 6-way valve can be connected to the second inlet port of the first heat exchanger.

The third port of the valve body of the 6-way valve can be connected to the second outlet port of the first heat exchanger.

Furthermore, the system according to the invention can further comprise a second heat exchanger for heating water, wherein the second heat exchanger comprises a first inlet port and a first outlet port and comprises a second inlet port and a second outlet port, wherein the second heat exchanger is connected to a second fluid circuit via its first inlet port and first outlet port, wherein the second fluid circuit comprises a second hot water source.

The fourth port of the valve body of the 6-way valve can be connected to the second inlet port of the second heat exchanger.

The fifth port of the valve body of the 6-way valve can be connected to the second outlet port of the second heat exchanger.

Besides, the system according to the invention can further comprise a hot water supply line.

The sixth port of the valve body of the 6-way valve can connected to the hot water supply line.

The configuration above allows to switch the order of contacting the primary fluid with heat from the first heat source (via the first heat exchanger) on the one hand and with heat from the second heat source (via the second heat exchanger) on the other hand.

The system can further comprise a first temperature sensor suitable for detecting a temperature of a fluid of the first fluid circuit and a second temperature sensor suitable for detecting a temperature of a fluid of the second fluid circuit, wherein the controller is configured to receive temperature information from the first and second temperature sensor. In this regard, the controller is further configured to control the at least one actuator of the system to switch the 6-way valve into a position selected from the group consisting of the first position and second position (optionally selected from the group consisting of the first position, second position and third position) based on a temperature information received from the first and second temperature sensor. In this embodiment, switching the flow sequence is made dependent on the temperature within each fluid circuit. This has the advantage that it can be ensured that the primary fluid is heated to a desired temperature with a maximum coefficient of performance because the primary fluid can be heated firstly by the fluid circuit having the lower temperature and then by the fluid circuit having the higher temperature. This saves heating costs (e.g. electricity costs) and can also maximize a use of renewable energy if the heat source of one of the fluid circuits is a renewable heat source (e.g. a solar thermal collector).

The controller can be configured to control the at least one actuator to switch the 6-way valve into the first position if the controller has determined that the temperature of a fluid in the second fluid circuit is higher than a temperature of the fluid in the first fluid circuit.

Moreover, the controller can be configured to control the at least one actuator to switch the 6-way valve into the second position if the controller has determined that the temperature of a fluid in the first fluid circuit is higher than a temperature of the fluid in the second fluid circuit.

Furthermore, the controller can be configured to control the at least one actuator to switch the 6-way valve into the third position if the controller has determined that the temperature of a fluid in the first fluid circuit is equal to a temperature of the fluid in the second fluid circuit.

The first hot water source can comprise or consist of a solar thermal collector, a waste-water fluid stream, a thermal energy storage device, a heat-recovery heat exchanger and/or a heat pump.

The second hot water source can comprise or consist of a solar thermal collector, a waste-water fluid stream, a thermal energy storage device, and/or a heat pump.

The first hot water source and/or second hot water source can comprise or consists of a renewable hot water source. This allows a more ecological and also economical operation of the system according to the invention.

With the following figures and examples, the subject-matter of the invention is intended to be described in more detail, without wishing to restrict said subject-matter to the specific embodiments shown here. Among the following figures, figures 1 to 3 show no embodiments according to the invention, but are helpful to understand certain aspects of the invention.

Figure 1 shows an example of a system of the prior art comprising a solar-thermal collector as first hot water source 22 and an air-to-water heat pump as second hot water source 23. The solar-thermal collector 22 is connected to a first heat exchanger 20 via a first inlet port C' of the first heat exchanger 20 and via a first outlet port B' of the first heat exchanger 20 and the air-to-water heat pump 23 is connected to a second heat exchanger 21 via a first inlet port E' of the second heat exchanger 21 and via a first outlet port D' of the second heat exchanger 21. In Figure 1A (Configuration 1), the primary heating fluid (water) is conveyed from a primary fluid cold inlet A to a primary fluid hot outlet F via firstly the second heat exchanger 21 (via its second inlet port D and second outlet port E) and then the first heat exchanger 20 (via its second inlet port B and second outlet port C), wherein this allows preheating the primary heating fluid by air-to-water pump 23. In Figure 1B (Configuration 2), the primary heating fluid (water) is also conveyed from a primary fluid cold inlet A to a primary fluid hot outlet F, but this time firstly via the first heat exchanger 20 (via its second inlet port B and second outlet port C) and then via the second heat exchanger 21 (via its second inlet port D and second outlet port E), wherein this allows preheating the primary heating fluid by the solar thermal collector. Configuration 1 shown in Figure 1A is beneficial if solar heating capacity is high because the air-to-water heat pump can be used for preheating the primary fluid at high coefficient of performance (COP) and the solar thermal collector is capable of heating the primary fluid to a high target temperature. However, if the heating power of the solar thermal collector drops such that it is no longer capable of heating the primary fluid to a high target temperature, Configuration 2 shown in Figure 1B is beneficial for ensuring that the primary fluid can still be heated to a high target temperature under these conditions. A possibility to switch between the two configurations is desirable.

Figure 2 shows the example of the system of the prior art of Figure 1 in a more schematic manner.

Figure 3 shows a reference means for switching between the Configuration 1 and the Configuration 2 in the prior art systems shown in Figures 1 and 2. The reference means is an arrangement of a first two-way valve V1, a second two-way valve V2, a third two-way valve V3, a fourth two-way valve V4, a fifth two-way valve V5 and a sixth two-way valve V6. For switching to Configuration 1 (see Figure 3A), the first two-way valve V1, the fourth two-way valve V4 and the fifth two-way valve V5 must be open and the second two-way valve V2, the third two-way valve V3 and the sixth two-way valve V6 must be closed. For switching to Configuration 2 (see Figure 3B), the first two-way valve V1, the fourth two-way valve V4 and the fifth two-way valve V5 must be closed and the second two-way valve V2, the third two-way valve V3 and the sixth two-way valve V6 must be open. This arrangement of six two-way valves has the disadvantages that it is complicated, requires a lot of room, is expensive to provide and is prone to downtimes because it is sufficient for a downtime if only one of the six two-way valves fails.

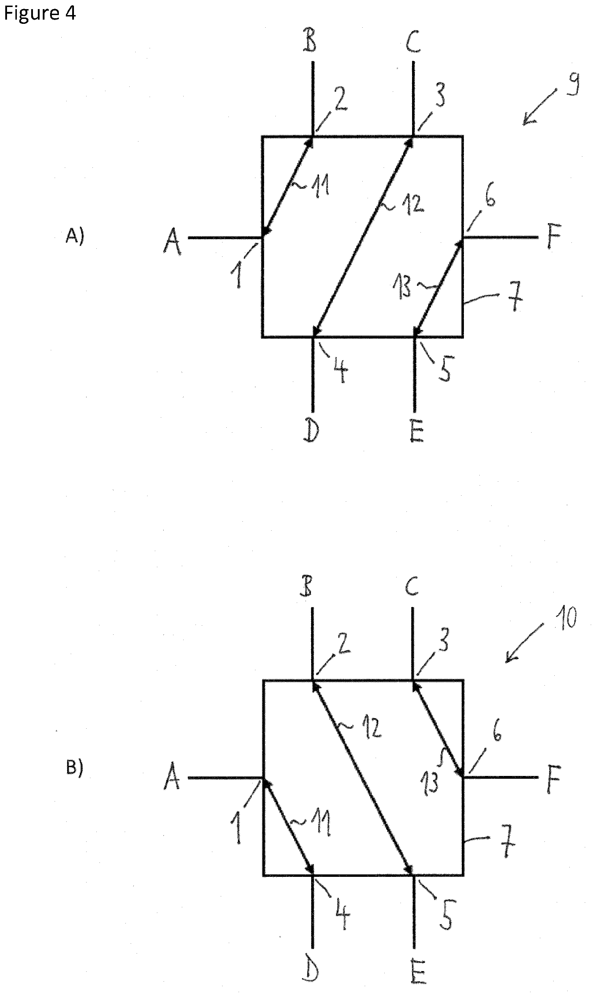

Figure 4 shows a means according to the invention for switching between the Configuration 1 and the Configuration 2 in the prior art systems shown in Figures 1 and 2, namely a 6-way valve according to the invention. For switching to Configuration 1 (see Figure 4A), the switching means of the 6-way valve must be switched to its first position, in which a first fluidic connection 11 between the first port 1 and the second port 2 (fluidically connecting the primary fluid cold inlet A with the first heat exchanger's second inlet port B), a second fluidic connection 12 between the third port 3 and fourth port 4 (fluidly connecting the first heat exchanger's second outlet port C with the second heat exchanger's second inlet port D), and a third fluidic connection 13 between the fifth port 5 and the sixth 6 port (fluidly connecting the second heat exchanger's second outlet port E with the primary fluid hot outlet F) is established, wherein the first fluidic connection 11, second fluidic connection 12 and third fluidic connection 13 are fluidically separate from each other. For switching to Configuration 2 (see Figure 4B), the switching means of the 6-way valve must be switched to its second position, in which a first fluidic connection 11 between the first port 1 and the fourth port 4 (fluidically connecting the primary fluid cold inlet A with the second heat exchanger's second inlet port D), a second fluidic connection 12 between the second port 2 and fifth port 5 (fluidly connecting the first heat exchanger's second inlet port B with the second heat exchanger's second outlet port E), and a third fluidic connection 13 between the third port 3 and the sixth port 6 (fluidly connecting the first heat exchanger's second outlet port C with the primary fluid hot outlet F) is established, wherein the first fluidic connection 11, second fluidic connection 12 and third fluidic connection 13 are fluidically separate from each other.

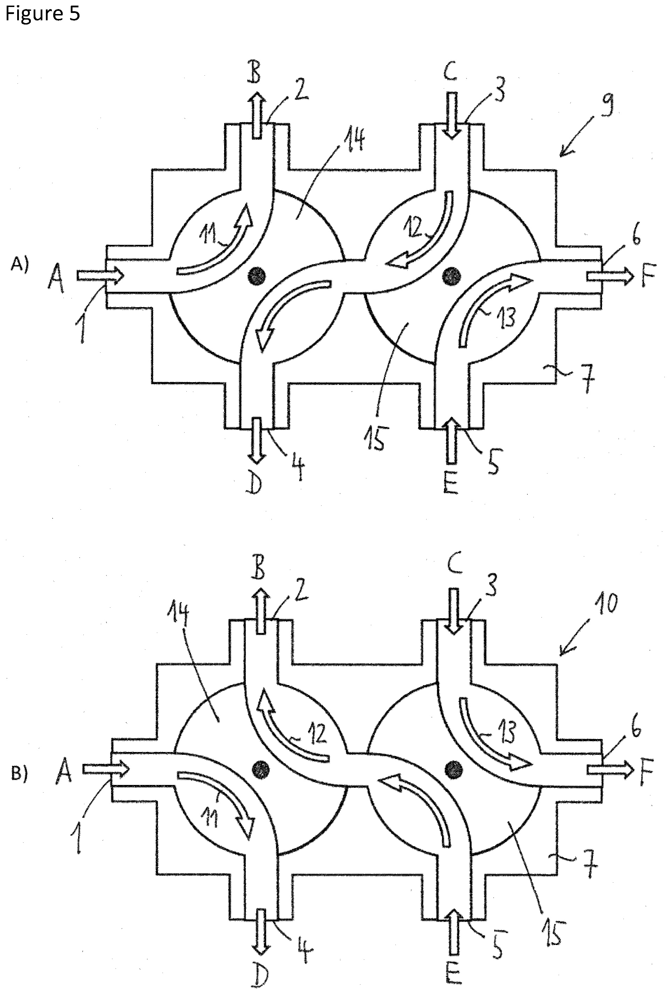

Figure 5 shows a 6-way valve according to the invention like the one shown in Figure 4 with more structural details. The arrows depict the flow of primary fluid in the Configuration 1 (see Figure 5A) and in the Configuration 2 (see Figure 5B). Moreover, the valve body 7 of the 6-way valve is illustrated and it is shown that, in this case, that the switching means of the 6-way valve consists of two switching members 14, 15 that each comprise a ball. Switching member 14 has two fluidic channels 11, 12 which are fluidically separated from each other and switching member 15 has two fluidic channels 12, 13 which are fluidically separated from each other.

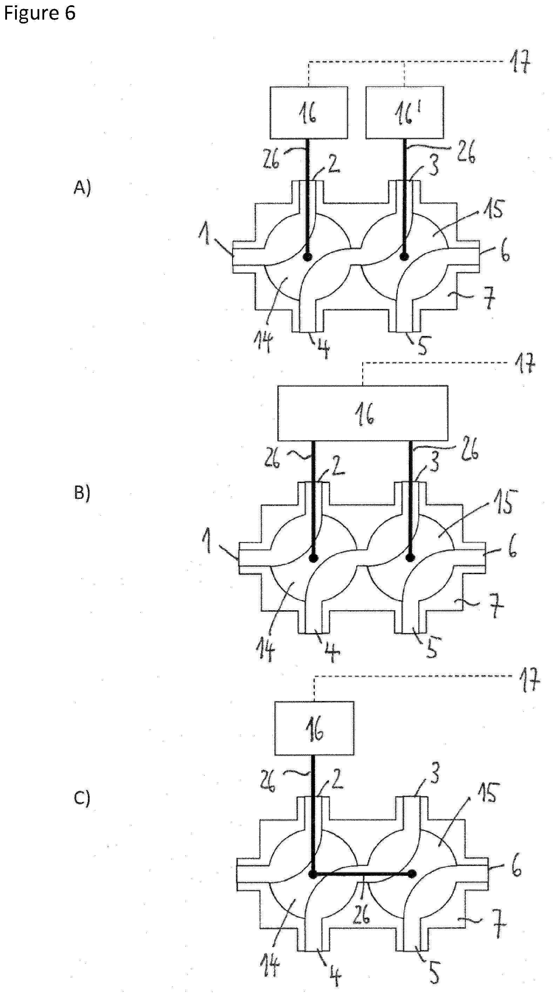

Figure 6 shows three different ways for actuating a 6-way valve according to the invention like the one shown in Figures 4 and 5. In the embodiment of Figure 6A, there are two actuators 16, 16', each having one mechanical connection (linkage) 26 to one switching member 14, 15, respectively. In the embodiment of Figure 6B, there is only one single actuator 16 having one mechanical connection (linkage) 26 to each switching member 14, 15, respectively. In the embodiment of Figure 6C, there is only one single actuator 16 having only one mechanical connection (linkage) 26 to one switching member 14, wherein said switching member 14 has a mechanical connection (linkage) 26 to the other switching member 15. In the configuration of Figures 6A and 6B, it is possible to rotate the two switching members 14, 15 independent from each other regarding the time of rotation and the degree of rotation. This is not possible with the configuration shown in Figure 6C, but said configuration has the advantage that it is more compact and less cost intensive.

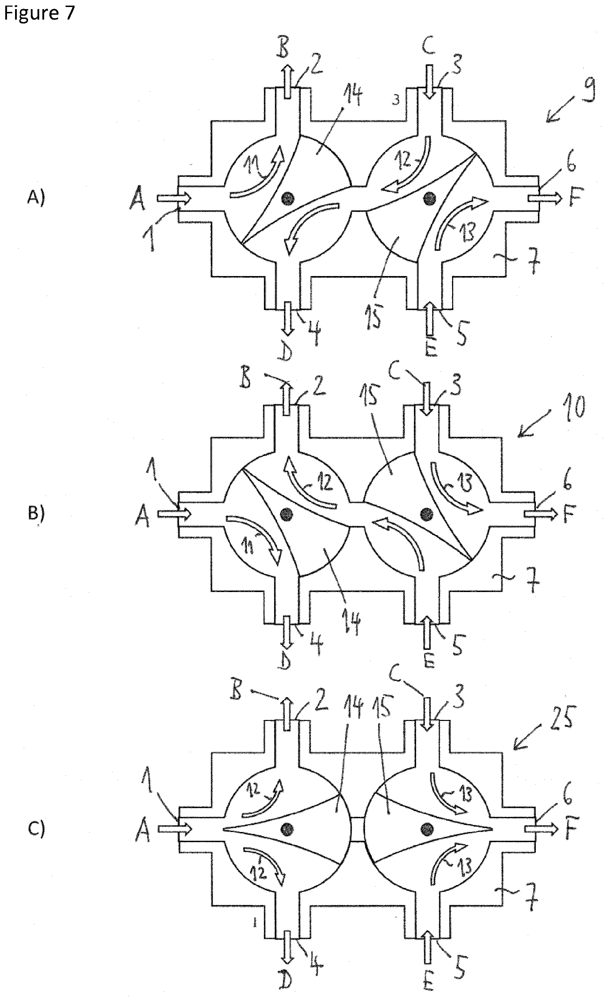

Figure 7 shows a further 6-way valve according to the invention. In this embodiment, the switching means of the six-way valve consists of two switching members 14, 15 that are suitable to switch the 6-way valve into the first position (Figure 7A), the second position (Figure 7B) and also a third position (Figure 7C) by a rotation thereof. The switching to the third position becomes possible because of the tapered form of the two switching members 14, 15. Specifically, in this embodiment, the two switching members 14, 15 each consist of tapered ball which allows (in the third position; see Figure 7C) to establish a first fluidic connection 11 between the first port 1, the second port 2 and the fourth port 4, and a second fluidic connection 12 between the third port 3, fifth port 5 and sixth port 6, wherein the first fluidic connection 11 and second fluidic connection 12 are fluidically separate from each other.

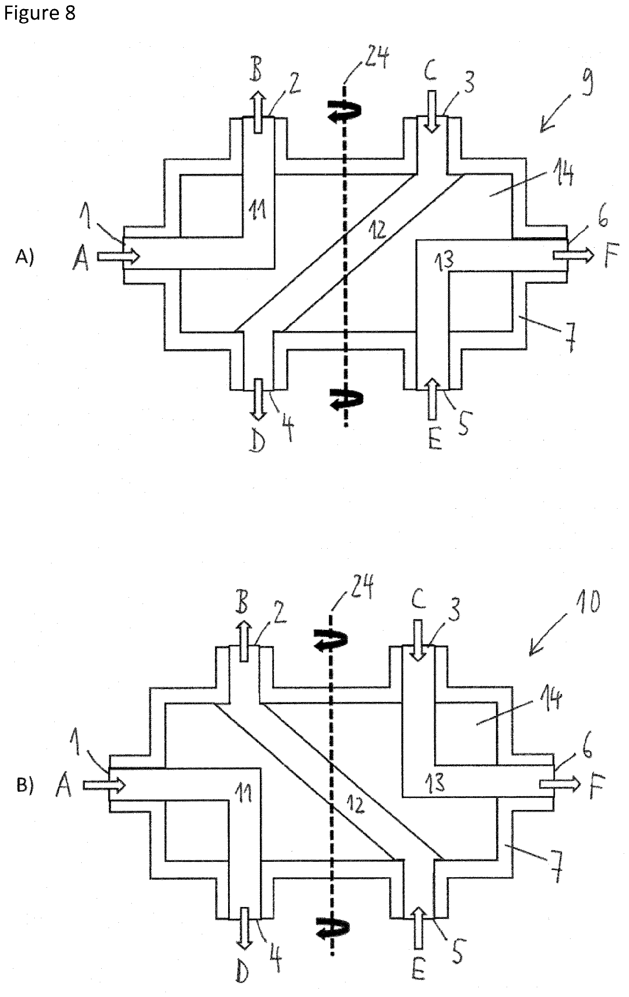

Figure 8 shows a further 6-way valve according to the invention. In this embodiment, the switching means of the six-way valve consists of one single switching member 14 that is suitable to switch the 6-way valve into the first position (Figure 8A) and second position (Figure 8B) by a rotation thereof, wherein the single switching member 14 consists of a cylinder having three fluidic channels 11, 12, 13 that are fluidically separated from each other. The switching can be effectuated by a rotation of the single switching member 14 around its rotational axis 24 (by 180 °).

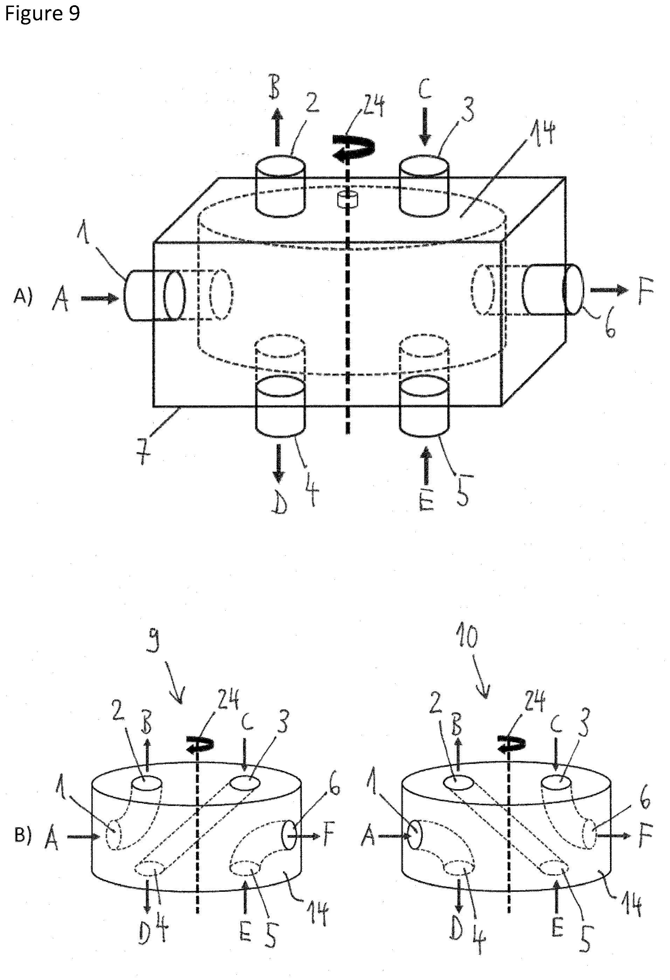

Figure 9 shows the 6-way valve of Figure 8 in more detail. Figure 9A shows an external view of the valve body 7 with its six ports 1, 2, 3, 4, 5, 6 corresponding to those shown in Figure 8, wherein the switching member 14 (in the form of a cylinder) can rotate around its rotational axis 24 inside the valve body 7. Figure 9B shows the switching member 14 (in the form of a cylinder) with its three internal flow channels that allow to make connections between the ports 1, 2, 3, 4, 5, 6 upon rotating the switching member 14 in the appropriate position. The left representation of Figure 9B indicates the port connections in the first position (corresponding to Figure 8A) and the right representation of Figure 9B indicates the port connections in the second position (corresponding to Figure 8B), achieved by rotating the cylinder by 180° around the rotational axis 24 of the switching member 14.

### Example 1 - First 6-way valve according to the invention

The 6-way valve of this example consists of a valve body which has a first port, a second port, a third port, a fourth port, a fifth port and a sixth port, and a switching means which is located within the valve body. The switching means is suitable to switch the 6-way valve into a i) first position in which a first fluidic connection between the first port and the second port, a second fluidic connection between the third port and fourth port, and a third fluidic connection between the fourth port and the fifth port is established, wherein the first, second and third fluidic connections are fluidically separate from each other; and ii) second position in which a first fluidic connection between the first port and the fourth port, a second fluidic connection between the second port and fifth port, and a third fluidic connection between the third port and the sixth port is established, wherein the first, second and third fluidic connections are fluidically separate from each other The two balls are structurally configured to be brought into a position relative to each other at which an internal channel is formed by the two balls which can fluidly connect two of the external ports of the 6-way valve with each other.

In this specific embodiment, the switching means consists of two switching members that are suitable to switch the 6-way valve into the first position and second position by a rotation thereof, wherein the two switching members each consist of a ball having two fluidic channels which are fluidically separated from each other (see Figures 5A and 5B). Two flow channels are bored or cut through each ball to make connections between ports on the valve body arranged at 90° from each other.

### Example 2 - Actuating the 6-way valve

Figures 6 illustrates some examples for actuating the 6-way valve. In this example, both switching members (balls) are required to be rotated 90° between the first position and the second position. This could be achieved using two separate actuators (Figure 6A) with a common control signal for sychronised operation, via a single actuator with two linkages to the switching means (Figure 6B) or via a single actor with one linkage to the switching means and one linkage between the switching members of the switching means (Figure 6C).

### Example 3 - Second 6-way valve according to the invention

The 6-way valve of this example is identical to the 6-way valve of Example 1 with the following additional feature:
The switching members (balls) are also suitable to switch the 6-way valve into a third position in which a first fluidic connection between the first port, the second port and the fourth port is established, and a second fluidic connection between the third port, fifth port and sixth port is established, wherein the first and second fluidic connections are fluidically separate from each other.

The third position has the advantage that it arranges process A and process B in parallel, rather than in series. In other words, in the third position, the primary fluid stream is divided (e. g. equally) between the two processes A and B. This can be achieved by using a ball which has tapered form, as shown in Figure 7. This creates two separate flow channels in the third position which divide after entering the first port and then recombine before exiting the sixth port.

### Example 4 - Third 6-way valve according to the invention

Unlike the 6-way valve of Example 1, the switching means of the 6-way valve of this embodiment does not have two switching members (i.e. two balls), but only one single switching member that is suitable to switch the 6-way valve into the first position and second position by a rotation thereof. Here, the single switching member consists of a cylinder having three fluidic channels which are fluidically separated from each other.

The advantage is a simpler construction and actuation.

The switching means of this 6-way valve can be implemented like shown in Figures 8 and 9. Specifically, a cylindrical-shaped rotating part (switching member) is placed inside a valve body (the valve trim/stem). In the cylindrical-shaped rotating part, three flow channels being separated from each other are cut. The flow channels change alignment with the ports of the 6-way valve when the cylinder is rotated. In Figure 8, the cylinder is rotated 180° to connect the first port to either the second port or the fourth port and the sixth port 6 to either the third port or the fifth port. A diagonal connection is also made either between the second port and the fifth port or between the third port and fourth port. This arrangement allows the valve stem to be connected to the top or bottom of the rotating cylinder in line with the central axis of rotation.

### List of reference signs

- 1:: first port of 6-way valve;
- 2:: second port of 6-way valve;
- 3:: third port of 6-way valve;
- 4:: fourth port of 6-way valve;
- 5:: fifth port of 6-way valve;
- 6:: sixth port of 6-way valve;
- 7:: valve body of 6-way valve;
- 8:: switching means;
- 9:: first position of 6-way valve;
- 10:: second position of 6-way valve;
- 11:: first fluidic connection;
- 12:: second fluidic connection;
- 13:: third fluidic connection;
- 14:: first switching member;
- 15:: second switching member;
- 16,16':: actuator;
- 17:: controller;
- 18:: cold water supply line;
- 19:: hot water supply line;
- 20:: first heat exchanger;
- 21:: second heat exchanger;
- 22:: first hot water source (e.g. solar thermal collector)
- 23:: second hot water source (e.g. heat pump);
- 24:: rotational axis of switching member;
- 25:: third position of 6-way valve;
- 26:: mechanical connection;
- A:: primary fluid cold inlet;
- B': first outlet port of first heat exchanger;
- B:: second inlet port of first heat exchanger;
- C':: first inlet port of first heat exchanger;
- C:: second outlet port of first heat exchanger;
- D':: first outlet port of second heat exchanger;
- D:: second inlet port of second heat exchanger;
- E':: first inlet port of second heat exchanger;
- E:: second outlet port of second heat exchanger;
- F:: primary fluid hot outlet;
- V1:: first two-way valve;
- V2:: second two-way valve;
- V3:: third two-way valve;
- V4:: fourth two-way valve;
- V5:: fifth two-way valve;
- V6:: sixth two-way valve.

## Claims

1. 6-way valve, comprising or consisting of
a) a valve body which has a first port, a second port, a third port, a fourth port, a fifth port and a sixth port; and
b) a switching means which is located within the valve body; **characterized in that** the switching means is suitable to switch the 6-way valve into a
i) first position in which a first fluidic connection between the first port and the second port, a second fluidic connection between the third port and fourth port, and a third fluidic connection between the fifth port and the sixth port is established, wherein the first, second and third fluidic connections are fluidically separate from each other; and
ii) second position in which a first fluidic connection between the first port and the fourth port, a second fluidic connection between the second port and fifth port, and a third fluidic connection between the third port and the sixth port is established, wherein the first, second and third fluidic connections are fluidically separate from each other.

2. 6-way valve according to the preceding claim, **characterized in that** the i) the first port is located opposite of the sixth port; and/or ii) the second port is located opposite of the fourth port; and/or iii) the third port is located opposite of the fifth port.

3. 6-way valve according to one of the preceding claims, **characterized in that** the switching means comprises at least one switching member which is suitable to be rotated within the valve body to different positions, wherein the different positions encompass at least the first position and the second position, optionally also a third position.

4. 6-way valve according to one of the preceding claims, **characterized in that** the switching means comprises or consists of two switching members that are suitable to switch the 6-way valve into the first position and second position, optionally also a third position, by a rotation thereof, wherein the two switching members preferably each comprise or consist of
i) a ball having two fluidic channels which are fluidically separated from each other; or
ii) a cylinder having two fluidic channels which are fluidically separated from each other; or
iii) a disc having two fluidic channels which are fluidically separated from each other;
wherein the two switching members are more preferably suitable to switch the 6-way valve from one of the positions into the other by a rotation of each switching member along a rotational axis by an angle in the range of 5° to 90°, particularly in the range of 10° to 90 °C, especially in the range of 20° to 90°, wherein the two switching members are optionally mechanically coupled to each other.

5. 6-way valve according to one of the preceding claims, **characterized in that** the switching means comprises or consists of one single switching member that is suitable to switch the 6-way valve into the first position and second position, optionally also a third position, by a rotation thereof, wherein the single switching member preferably comprises or consists of
i) a ball having three fluidic channels which are fluidically separated from each other; or
ii) a cylinder having three fluidic channels which are fluidically separated from each other; or
iii) a disc having three fluidic channels which are fluidically separated from each other;
wherein the single switching member is more preferably suitable to switch the 6-way valve from one of the positions into the other by a rotation thereof along a rotational axis by an angle in the range of 5° to 180°, particularly in the range of 10° to 180 °C, especially in the range of 20° to 180°.

6. 6-way valve according to one of the preceding claims, **characterized in that** the switching means is suitable to switch the 6-way valve into a third position in which a first fluidic connection between the first port, the second port and the fourth port is established, and a second fluidic connection between the third port, fifth port and sixth port is established, wherein the first and second fluidic connections are fluidically separate from each other.

7. 6-way valve according to claim 6, **characterized in that** the switching means comprises or consists of two switching members that are suitable to switch the 6-way valve into the third position by a rotation thereof, wherein preferably
i) a first of the two switching members has a tapered part which is suitable to be rotated towards the first port and which is suitable to establish a fluidic connection between the first port, second port and fourth port; and
ii) a second of the two switching members has a tapered part which is suitable to be rotated towards the sixth port and which is suitable to establish a fluidic connection between the sixth port, third port and fifth port.

8. System for providing heating to a fluid stream, comprising
i) a 6-way valve according to one of the preceding claims; and
ii) at least one actuator which is suitable for moving the switching means of the 6-way valve, optionally at least two actuators which are suitable for moving the switching means of the 6-way valve; and
iii) a controller configured to control the at least one actuator, optionally the at least two actuators.

9. System according to claim 8, **characterized in that** the system further comprises
a) a cold water supply line;
b) a first heat exchanger for heating water, wherein the first heat exchanger comprises a first inlet port and a first outlet port and comprises a second inlet port and a second outlet port, wherein the first heat exchanger is connected to a first fluid circuit via its first inlet port and first outlet port, wherein the first fluid circuit comprises a first hot water source;
c) a second heat exchanger for heating water, wherein the second heat exchanger comprises a first inlet port and a first outlet port and comprises a second inlet port and a second outlet port, wherein the second heat exchanger is connected to a second fluid circuit via its first inlet port and first outlet port, wherein the second fluid circuit comprises a second hot water source;
d) a hot water supply line.

10. System according to claim 9, **characterized in that** the
i) first port of the valve body of the 6-way valve is connected to the cold water supply line; and/or
ii) second port of the valve body of the 6-way valve is connected to the second inlet port of the first heat exchanger; and/or
iii) third port of the valve body of the 6-way valve is connected to the second outlet port of the first heat exchanger; and/or
iv) fourth port of the valve body of the 6-way valve is connected to the second inlet port of the second heat exchanger; and/or
v) fifth port of the valve body of the 6-way valve is connected to the second outlet port of the second heat exchanger; and/or
vi) sixth port of the valve body of the 6-way valve is connected to the hot water supply line.

11. System according to one of the claims 9 or 10, **characterized in that** the system further comprises
i) a first temperature sensor suitable for detecting a temperature of a fluid of the first fluid circuit; and
ii) a second temperature sensor suitable for detecting a temperature of a fluid of the second fluid circuit;
wherein the controller is configured to receive temperature information from the first and second temperature sensor,
wherein the controller is configured to control the at least one actuator to switch the 6-way valve into a position selected from the group consisting of the first position and second position, optionally selected from the group consisting of the first position, second position and third position, based on a temperature information received from the first and second temperature sensor.

12. System according to one of the claims 9 to 11, **characterized in that** the controller is configured to control the at least one actuator to switch the 6-way valve into the
i) first position if the controller has determined that the temperature of a fluid in the second fluid circuit is higher than a temperature of the fluid in the first fluid circuit; and/or
ii) second position if the controller has determined that the temperature of a fluid in the first fluid circuit is higher than a temperature of the fluid in the second fluid circuit; and/or
iii) third position if the controller has determined that the temperature of a fluid in the first fluid circuit is equal to a temperature of the fluid in the second fluid circuit.

13. System according to one of the claims 9 to 12, **characterized in that** the first hot water source comprises or consists of a solar thermal collector, a waste-water fluid stream, a thermal energy storage device, a heat-recovery heat exchanger and/or a heat pump.

14. System according to one of the claims 9 to 13, **characterized in that** the second hot water source comprises or consists of a solar thermal collector, a waste-water fluid stream, a thermal energy storage device, and/or a heat pump.
